# EUROPEAN PATENT SPECIFICATION

(11) **EP 0 660 962 B1**
(45) Date of publication and mention of the grant of the patent: **09.04.1997**
(21) Application number: 93922589.2
(22) Date of filing: 12.10.1993
(51) Int. Cl.: G07F 7/10

(54) **A DATA INFORMATION SYSTEM**
DATENINFORMATIONSSYSTEM
SYSTEME D'INFORMATIONS PAR DONNEES

(30) Priority: 12.10.1992 GB 9221362
(43) Date of publication of application: 05.07.1995
(73) Proprietor: ARGOS DISTRIBUTORS LIMITED, Central Milton Keynes MK9 2NW (GB); HTEC LIMITED, Southampton SO2 1LD (GB)
(72) Inventor: BRINKMAN, Barrie, Southampton SO2 1LD (GB); THOMAS, Herb, Central Milton Keynes MK9 2NW (GB)
(74) Representative: Molyneaux, Martyn William
(86) International application number: GB9302103
(87) International publication number: WO9409454

(56) References cited:
- EP-A- 0 202 473
- DE-A- 3 620 755
- DE-A- 3 911 667

## Description

### Background of the Invention

This invention relates to a record carrier for storing data from a plurality of write means, to an arrangement for writing data to the record carrier, to a reader for the record carrier, and to a method of conveying data information using the record carrier.

### Field of the Invention

In recent times, it has been customary to offer incentives to customers and potential customers, in an endeavour to retain or obtain their loyalty to a particular product, or to a particular vendor. Foremost amongst these loyalty-incentive schemes have been trading stamps, where the purchaser of goods receives a quantity of the trading stamps related to the value of the purchases made.

The trading stamps were collected, and stuck into books which were then exchanged for goods. Trading stamps have a number of disadvantages. In particular, due to their adhesive quality, they are not easy for either the customer or the vendor to keep, especially in damp conditions. From the vendor's point of view, trading stamps are bulky, difficult to handle and their fraudulent use is not easy to prevent. From the customer's point of view, the stamps are difficult to handle when out of their book, and the large number of stamps necessary to obtain a substantial value for redemption are cumbersome.

A similar scheme, used frequently in the United Kingdom in association with petrol stations, concerns the issuing of collectable vouchers related to the value of purchases made. Such vouchers are collected and exchanged, usually at the point of issue, for a narrow range of articles.

Systems using magnetic cards which store information representative of a value are also known in the art. A first type of magnetic card system, used for example in telephone systems, requires the user to buy a card which contains information corresponding to a "full" state. As the card is used, for example, for making a telephone call, the information content on the card is changed to indicate the amount of use which has taken place. Finally the information stored on the card indicates to the apparatus with which the card is being used that the card is "empty", and usage of the telephone or other facility is thereupon terminated. Such cards are usually magnetic-stripe cards, although other types of cards have been proposed. The magnetic-stripe cards have the advantages of being light and small, as well as being cheap to manufacture.

There are also card systems in use, consisting of magnetic-stripe cards, and card-write means and card-read means at a number of different locations. The systems are analogous to the collectable tokens system in that credits are made to a card of a purchaser, the amount of credit being related to the value of a purchase made. When the card has been credited to a value corresponding to the "full" state of the card, the card is exchanged for an item of a predetermined value, such as a gift token. In a known system the "full" cards are sent to a central control location, together with written information indicating the identity of the card holder. The item returned to the card holder is also sent, for instance by post. Systems of this type are relatively expensive to operate and require either pre-payment for the credits to be issued or only a single credit issuer organisation. This is because there is no way of indicating the source of credits on a particular card and thus no way of reconciling credits issued by a particular issue with credits redeemed.

DE-A-3911667 discloses a service meter for use on public transport , such as a railway car or a tram-car. The service meter has a write, read and control unit for accepting a memory card and the meter also has a display. In use a memory card having memory storage representative of prepaid units is inserted into the write, read and control unit and a user keys into the meter a destination whereupon the cost in units of the fare is deducted from the memory card. The meter may insert onto the memory card date, time, and journey details so that a ticket inspector may inspect the memory card to ensure that the memory card was inserted into the service meter at the commencement of a journey. Thus the disclosed service meter inputs event data onto the memory card.

DE-A-3620755 discloses a vending machine having a value card which is associated with that particular vending machine. When the value card is inserted into the vending machine a number of value units corresponding the cost of the goods is removed from the unit recorded on the card and the goods are then released. The value card may be topped up by inserting the card into the vending machine and inserting cash into the vending machine so that value units are written onto the card.

EP-A-202473 discloses a card issuing apparatus for adding data onto a memory card which may be used in an automated teller machine and the memory card has a magnetic stripe for allowing data to be read onto the card and read from the card. The card also has an area for storing unique data of each particular card and an area for storing the amount of money held by the card. According to a first aspect of this invention there is provided a record carrier storing data from a plurality of issuers, each issuer having one or more write means, said record carrier including a storage area, capable of data redundancy whereby said data in said area is representative of and discerns each said issuer and is representative of an event associated with each said write means of said issuer, and the format of the data is adaptively configurable depending on the number of issuers such that data redundancy may be reduced with increasing numbers of issuers.

Preferably said data comprises identifying data indicative of the identity of a respective write means and event data indicative of an event associated with the respective write means.

Advantageously said storage area stores data representative of a first and last write means operatively associated with said record carrier.

Conveniently said event data is representative of a numerical value.

Advantageously the event data for each identified write means is stored as a total numerical value for said each identified write means.

Conveniently the event data for all of the identified write means is stored in said storage area as a total separately from said event data for each identified write means.

Preferably the event data for all of the identified issuer is stored in said storage area as a total separately from said event data for each identified issuer.

Advantageously said data further comprises record carrier identifying data, distinctive of the record carrier.

Conveniently the record carrier is of substantially credit-card dimensions.

Advantageously data are stored on magnetic tracks.

According to a second aspect of this invention there is provided an arrangement for writing and reading data from one of a plurality of issuers to a non visibly readable record carrier having a storage area capable of data redundancy comprising means for providing identifying data indicative of the issuer, means for providing event data representative of an event associated with said issuer, write means for writing a data portion including said identifying data and said event data to said record carrier such that the data portion indicates the event data and the issuer writing said data portion, a record carrier reader for providing read data corresponding to data stored on the associated record carrier and a detector for evaluating said read data, the output of the detector controlling the write means, and said arrangement being arranged to adaptively configure the format of the data on said record carrier so that data redundancy may be reduced depending upon the number of issuers read from said record carrier.

Preferably said event data is representative of a numerical value.

Conveniently the detector determines the total numerical value of all previously stored event data on said record carrier and provides a control signal for inhibiting said write means if the total value exceeds a predetermined value.

Advantageously the detector detects the number of previously stored data portions on said recorder carrier and provides a control signal for inhibiting said write means if said number exceeds a predetermined number.

Preferably the detector detects previously stored identifying data in said read data, and said arrangement further comprises comparison means for comparing said previously stored identifying data with said identifying data indicative of the arrangement of concern, whereby if no previously stored data portion includes identifying data indicative of said arrangement, then said write means writes a new data portion to said record carrier, said new data portion comprising identifying data indicative of said arrangement and event data associated with said arrangement.

Advantageously the detector is arranged to detect previously stored event data of said previously stored data portions and if a stored data portion includes identifying data indicative of said arrangement, the said write means writes a data total representative of the sum of:
(a) the new numerical value of said event data associated with said arrangement; and
(b) the numerical value of said previously stored event data to that portion in place of said previously stored event data.

Conveniently the arrangement further comprises means for determining the number of data portions to be written to said record carrier, and control means responsive to the said number for controlling said write means whereby said number of times of writing said data portions depends on the number of data portions.

Preferably stored data portions and, if applicable, a new data portion are written afresh to said record carrier whereby data portions representative of data having higher numerical values of event data are presented for reading before data portions having lower numerical values of event data.

Advantageously the arrangement has discriminator means for discrimination of data portions to be written to said record carrier into first data portions having identifying data exhibiting a first characteristic and second said data portions having identifying data exhibiting a second characteristic and format control means, responsive to the total number of data portions to be written to said recorder carrier and operable if the total number of data portions exceeds a predetermined threshold to cause said write means to write to said record carrier only event data from a first said data portion, and to write to said record carrier said second data portions including identifying data and event data.

Conveniently said event data associated with said arrangement is written to memory means associated with said arrangement substantially contemporaneously with writing said data to said record carrier.

Advantageously a keyboard is provided for input of said event data to said arrangement.

Conveniently said record carrier is of substantially credit card dimension.

Preferably data are stored in magnetic tracks on said record carrier.

According to a third aspect of this invention there is provided a reader for a record carrier embodying data input by one or more write means associated with a respective one of a plurality of issuers, said data comprising identifying data representative of said issuer and event data indicative of an event recorded by the write means of said issuer, said reader including means for reading said identifying data, means for reading said event data and means for correlating said identifying data and event data associated therewith whereby the format of the data is adaptively configurable depending on the number of issuers such that data redundancy may be reduced with increasing numbers of issuers.

Preferably the reader comprises means for storing said correlated identifying data and event data.

Conveniently the reader further comprises data communication means for transmitting said correlated identifying and event data to data processor means.

According to a fourth aspect of this invention there is provided a method of conveying data information from a plurality of issuers each utilising one or more read-write arrangement, each arrangement comprising means for providing identifying data indicative of the respective issuer, means for providing event data indicative of an event associated with the respective arrangement of said issuer and at least one record carrier evaluator, comprising the steps of:
(a) providing at least one record carrier having a storage area capable of data redundancy;
(b) bringing said record carrier into cooperation with a respective read-write arrangement;
(c) reading data stored on said record carrier;
(d) writing a data portion to said record carrier, said data portion comprising said identifying data and said event data whereby the format of the data is adaptively configurable depending on the number of issuers such that data redundancy may be reduced with increasing numbers of issuers;
(e) bringing said record carrier into cooperation with a record carrier evaluator;
(f) evaluating data written to said record carrier; and
(g) correlating said identifying data with said event data so as to identify the read/write arrangement to which said event was associated.

Advantageously step (b) further comprises:
1. reading said record carrier;
2. determining whether said carrier embodies previous data portions comprising identifying data indicative of a read/write arrangement;
3. storing each said previous data portion in said read/write arrangement; and
4. step (d) further comprises writing said stored data portions to said record carrier.

Conveniently the method further comprises the steps of:
counting the number of data portions to be written to a record carrier and in dependence thereon, controlling said number of times of writing said data portion.

Preferably in the method, if said counted number of data portions is below a first threshold, said write means is controlled to write said data portions twice on each of two data tracks, if said counted number is above said first threshold but below a second threshold, said write means is controlled to write said data portion once on each of the two data tracks and if said counted number is above said second threshold, said write means is controlled to write said portion once jointly between said two data tracks.

Advantageously the method further comprises the steps of:
discriminating the data portions to be written to said record carrier into first data portions having identifying data exhibiting a first characteristic and second data portions having identifying data exhibiting a second characteristic; and
in dependence on the counted number of data portions to be written to a record carrier, writing said second data portions to said record carrier and, from a first data portion, writing only event data to said record carrier.

Advantageously said event data represents a numerical value and in step (f) data portions are written to said record carrier with data portions representing numerical values of event data of higher value being presented on said record carrier before said portions representing lower numerical value.

Conveniently said record carrier is a magnetic-stripe card.

### A Brief Description of the Drawings

The invention will now be described by way of example with reference to the accompanying drawings in which:
Figure 1 shows a schematic diagram of a data information system in accordance with an aspect of the invention;
Figures 2(a) to 2(c) show a record carrying card in accordance with another aspect of this invention in which the Figures show formats of data stored on the record carrying card at different stages of use;
Figure 3(a) shows a schematic diagram of an arrangement for writing data in accordance with a further aspect of this invention;
Figure 3(b) shows a schematic view of a keyboard for use with the arrangement for writing data;

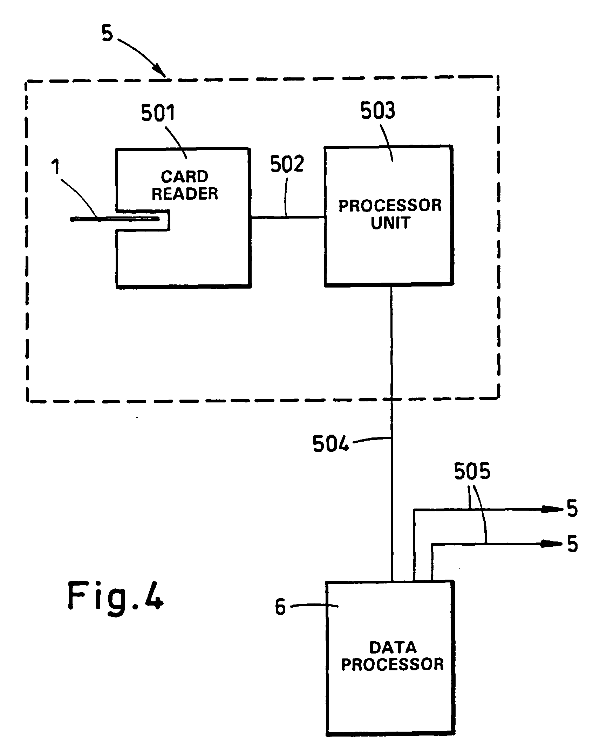

Figure 4 shows a schematic diagram of a reader for a record carrier;
Figure 5 shows the arrangement for writing data in combination with an electronic point of sale (EPOS) terminal;
Figure 6 shows the arrangement for writing data in combination with a data processor unit; and
In the Figures, like reference numerals indicate like parts.

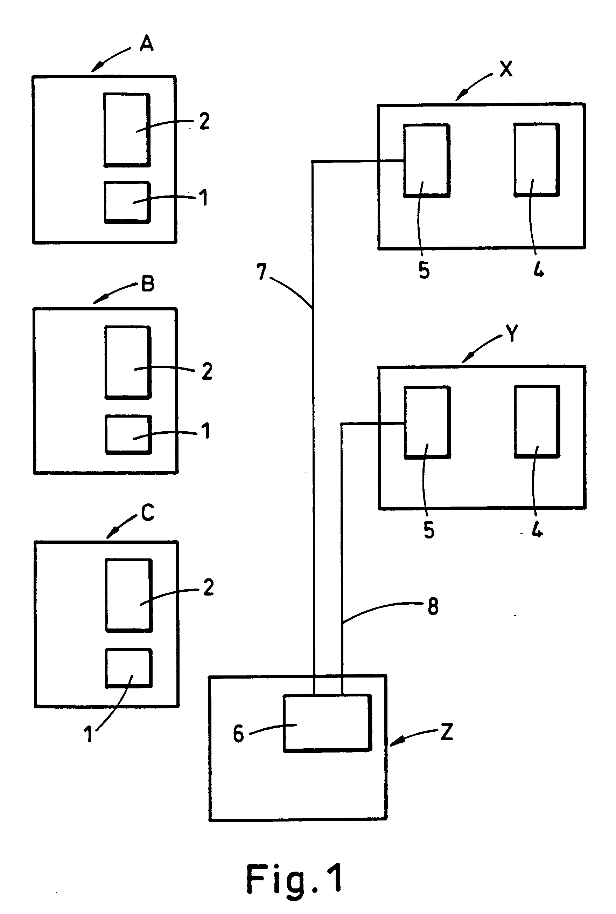

The data information system shown in Figure 1 has first, second and third issuers A, B and C, normally at different locations, which each have stocks of "empty" cards 1 furnished by a card provider Z. The issuers each have a respective arrangement for writing data, each arrangement comprising one or more credit issuance terminals 2. Where the arrangement comprises more than one terminal, the terminals may be dispersed, for instance distributed among premises of the issuer in different locations, eg cities, towns. In the currently described preferred embodiment, the cards are three-track magnetic stripe cards, known per se. First and second redeemers X and Y have card value readers 4 and readers for record carriers hereinafter called card control readers 5. A card provider effects central control using a data processor 6 coupled via data channels 7 and 8 to respect card readers 5.

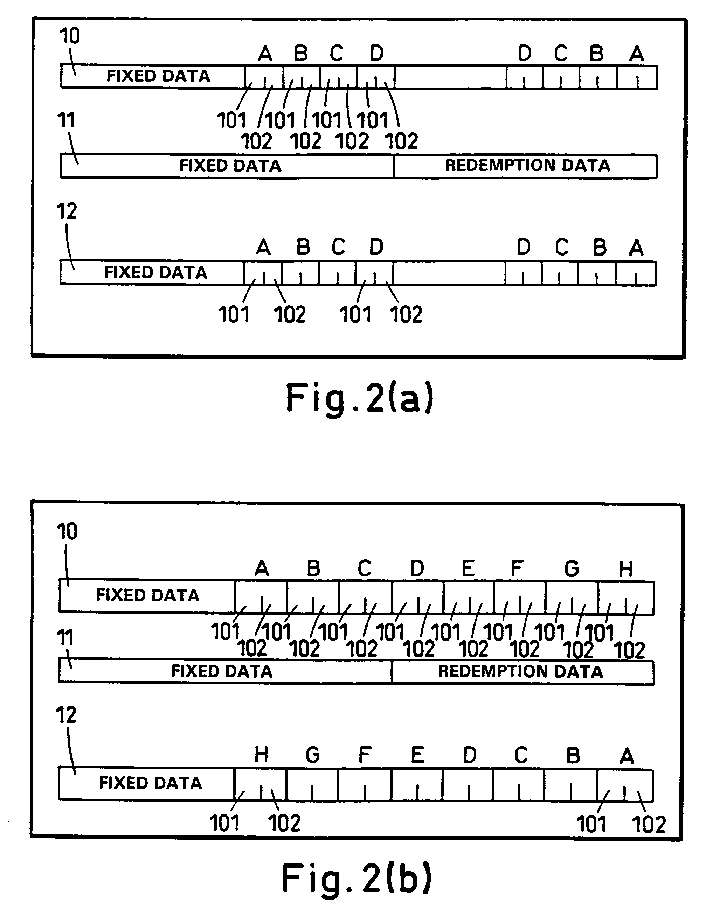

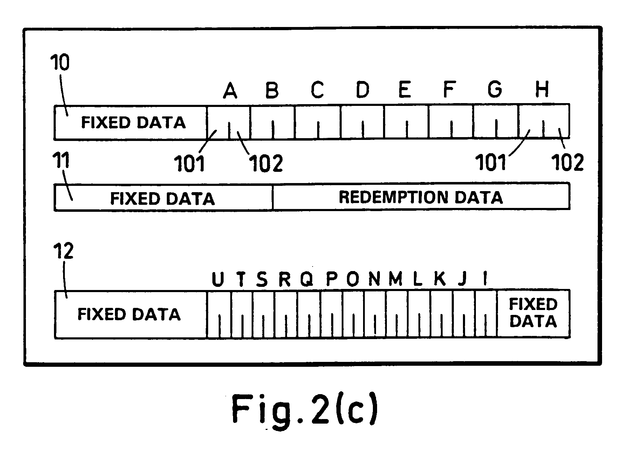

As a customer completes a first transaction on the premises of one of the credit issuers A, B, C, the customer will be given a new card 1 with a data portion (101, 102 in Figure 2(a)-(c)) written to it having data representative of the identity of the one credit issuer (identifying data 101) and a numerical value representative of credit points (event data 102) made by that issuer. Alternatively the customer will provide a card already in his possession to the issuer so that the issuer can write that data portion to the card. The identifying data in the presently described embodiment consists of an account number representative of the issuer of concern. Data which includes the identifying data of a credit issuer together with the amount of credit (event data) input by that issuer is written to the card in a unit termed herein a "bucket". As will be described later herein, a data portion written to the card may be a single bucket, or plural buckets.

In the presently described embodiment, such event data includes data on the first and last transaction entered by a credit issuer of concern. This data includes the time and date of the first and last transaction entered by the credit issuer, and data identifying the specific credit issuance terminals where those first and last transactions were entered. Where only one transaction has been entered by the credit issuer, the first and last transactions are coterminous and written accordingly. The last transaction is updated when a second or subsequent transaction is entered by the same issuer.

Each time a transaction is made, information on the card is read off the card, and re-written to the card including any updating data.

Depending on the number of credit issuers who have entered information to the card, the information stored on the card is held in different formats. As the card is credited by more and more credit issuers, the format of the data is adapted to allow for the higher data quantities involved whilst reducing redundancy, as far as possible. In this respect;
a. As shown in Figure 2(a) for the first few credit issuers visited, data portions written to the card have buckets comprising the identifying data and event data 101, 102 respectively repeated to achieve multiple redundancy using two tracks 10, 12 of the three tracks 10, 11, 12 on the card. Far example, for 1-4 credit issuers visited, the data portion for each issuer has four buckets i.e. two each on tracks 10 and 12. On each of the two tracks used for storing buckets, the buckets are written in a first order (A, B, C, D) and then the information repeated in a second order of the buckets (D, C, B, A) the second order being a mirror-image of the first order. This helps to overcome problems caused by physical damage to the magnetic stripe, as later described herein.
b. When a first threshold number of credit issuers is visited but less than a second threshold number of credit issuers, e.g., 5-8 credit issuers, then the data portions already written on the card are read off, as described above, and buckets making up data portions are re-written only once per track on the two bucket-storage tracks 10, 12 of the card, with each data portion having one bucket in each of the tracks, i.e., the buckets associated with issuer A-H are written once onto track 10 and once onto track 12. Track 11 referred to as the "redemption track" does not store buckets (as shown in Figure 2(b). In this case the arrangement of buckets on bucket-storage track 12 is maintained as a mirror-image of the arrangement of buckets on the track 10.
c. If the second higher threshold number of credit issuers is exceeded, redundancy can no longer be achieved and buckets are only stored once, each bucket being presented on a single track only as shown in Figure 2(c). In other words, the data portion for each issuer has a single bucket.

In the presently described embodiment, the redemption track, track 11 of the card stores data termed "redemption data", including the total value of the credit held on the card, the total value of the credit issued by prepaying credit issuers, described later herein, and data identifying the specific credit issuance terminal last visited and a security number.

The redemption track 11, further holds so-called "fixed data", which does not vary with the value of transactions. The fixed data includes a unique identifier for the card, data identifying the credit issuance terminal at which the card was first used, together with the time and date of that use, and also data identifying the latest credit issuance terminal used for a transaction, with the time and date of that transaction. Thus certain of the fixed data is updated upon each transaction. Fixed data is also held on both the bucket-storage tracks 10, 12, although if the card is used for large numbers of credit issuers, the fixed data on one bucket-storage track 12 may be sacrificed if required while retaining two copies of fixed data on the other bucket-storage track and the redemption track, to provide redundancy.

It has been found advantageous to rank the respective buckets according to the numerical value of credit points they represent. Each time credits are made to a card the bucket with the highest numerical value of credit points on the card is written in a position on the card whereby that value will be read first by a reader, and is followed by successive buckets representative of a descending order of credit points. For the case where only a few issuers appear on the card (enabling the use of redundancy as described above) the "mirror-image" presentation allows the card to be read from either direction while at the same time ensuring that the highest value bucket (A) is read first.

Cards may become physically damaged, for instance by a key or coin scratch across the magnetic stripe, and this would normally result in data loss. However the method described above using redundancy provides a high degree of data security against such damage.

Two types of credit issuers are envisaged in the system, namely pre-paying credit issuers who pay the card redeemer in advance for a number of credits to be made to cards, and post-paying credit issuers who pay in arrears according to the actual number of credits which they have actually entered onto cards. To differentiate between pre-paying issuers and post-paying issuers, a separate data bit could be used, but in the presently described preferred embodiment, the different account numbers of the credit issuers are used. To avoid the need for each credit issuance terminal carrying out extensive checks on identifying data from a card of concern, pre-paying and post-paying issuers have accounts numbered in separate numerical regions, for instance account numbers below 500 being for pre-paying issuers, and those above 500 for post-paying issuers. It is essential for the card redeemer accurately to ascertain the amount of credit entered by each post-paying credit issuer sc as to charge them correctly. Hence buckets from post-paying credit issuers are stored securely in that they are retained in full on the card until redemption. If a card is used at a sufficient number of credit issuers that the card becomes filled with buckets from post-paying issuers, a subsequent attempt to add a new bucket will result in rejection of the card by the terminal, as described later herein.

It may be useful for the card provider to be able to detect how much credit was issued by each pre-paying credit issuer e.g., for market information purposes. To this end, buckets from pre-paying issuers are stored on respective cards until a first predetermined number of credit issuers, e.g. 9 issuers, appears on the card. A card used at only a small number of credit issuers thus retains buckets from both post-paying and pre-paying credit issuers. However, once a card has more than the first predetermined number of issuer entries, the buckets of pre-paying issuers are sacrificed one by one as necessary to make space for buckets from post-paying issuers. The total of pre-paid credit points is already held on the card on the redemption track 11, and thus the customer's credit remains the same regardless of such bucket sacrifices. Once a second predetermined number of credit issuers, e.g. 17 issuers, appears on the card, no buckets of prepaying issuers are stored, as such buckets will all have been sacrificed.

Analysis of the habits of consumers has shown that under normal day to day conditions only a few credit issuers will be visited during the life of a particular card. This is particularly true where the maximum credit storable on a card is low, as is preferred. Thus although the system as a whole may have a large number of credit issuers, cards need only cater for a relatively small number, for example between ten and thirty issuers.

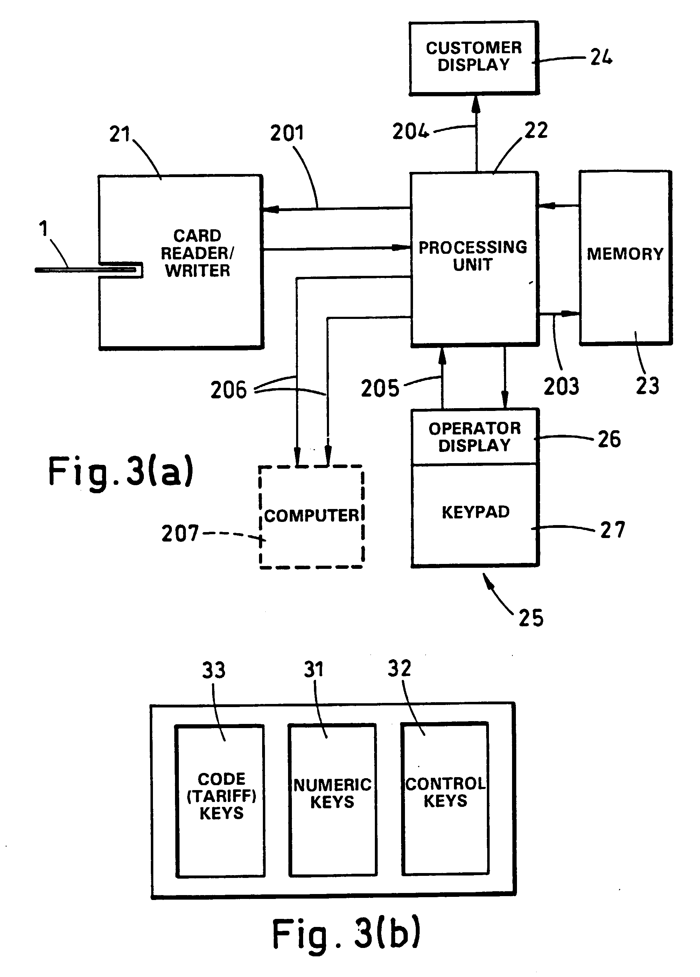

Figure 3(a) shows a schematic diagram of an arrangement for writing data to a record carrier, the arrangement comprising a single credit-issuance terminal. It will of course be understood that an arrangement for writing data may include plural such terminals. In such a multi-terminal arrangement, each terminal will write the same arrangement-identifying data to associated cards, and may also write data representative of the specific terminal of the plurality, as described above herein.

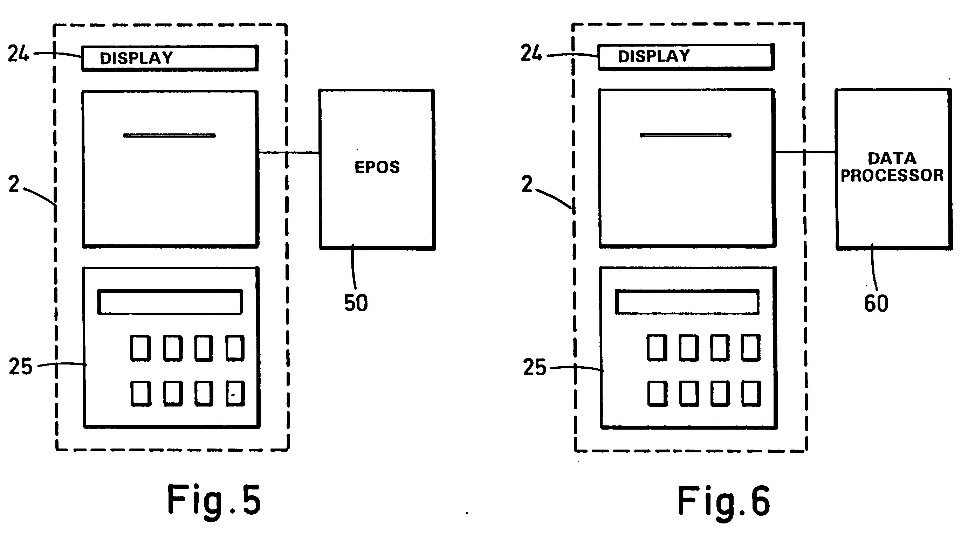

The single terminal of the presently described embodiment consists of a card reader/writer 21 coupled via a communication channel 201 to a processing unit 22. The processing unit is linked via a data channel 203 to a memory 23. The processing unit 22 is coupled via a further data channel 204 to a customer display unit 24, and via yet a further data channel 205 to an operator module 25 having an operator display 26 and a keypad 27. A data bus 206 may also be connected to the processing unit 22, the bus 206 allowing the credit-issuance terminal to cooperate with other devices (described later herein with reference to Figures 5 and 6).

The keyboard for the credit issuance terminal is shown in Figure 3(b) and has numerical keys 31, control keys 32, e.g., "ENTER", "DELETE", and three code keys 33, described later herein.

In use the customer display 24 is positioned to be visible to a customer. When no card is in the terminal 21 the processing unit 22 may provide customer display messages, preferably so that over a period of time the whole display is activated. This draws the attention of the customer to the display and conveys messages to him, while at the same time providing a test of the display.

The operation of the credit issuance terminal 2 will now be described in greater detail.

When a customer has made one or more purchases and wishes to have a corresponding amount of credit entered to a card, card 1 is inserted into a slot on the credit-issuance terminal 2 so as to associate it with the card reader/writer 21. If the card was previously unused, the issuance terminal detects this and writes a unique identifier to the card to initialise it for use. If the card has been previously used, the card reader/writer 21 is controlled by the processing unit 22 via channel 201 to read information held on the card 1. The processing unit detects the data read by the reader/writer 21 and carries out various checks, for instance to check the card identifier for validity and also to ensure that the card does not carry the full capacity of credit for such a card as described later herein. If the card is indeed full, then the credit issuance terminal will reject the card. If the card is acceptable to the terminal, information from the card is transferred to temporary storage of the processing unit 22. As previously discussed this information includes the identity and amount of credit already made to the card by post-paying credit issuers, derived from the or each bucket of the data portions entered by such issuers, information on pre-paying credit issuer transactions, the card unique identifier, the total amount of credit on the card and the total amount of pre-paid credit on the card, together with time information of transactions. The customer display 24 shows the total amount of credit already on the card 1. If the credit issuance terminal 2 is a stand-alone device, then an operator will key in using the numeric keys 31 shown in Figure 3(b) the value of the purchase made and also may use one or more of the code keys 33 to indicate the type of transaction which has been made. The number and type of code keys and their method of use depend on the type of transactions of interest. For example, if the credit issuance terminal 2 is situated at a petrol filling station, five code keys 33 could be used, representing the fact that the majority of the purchase value was in respect of leaded petrol, unleaded petrol, diesel fuel, other vehicle-based purchases and food or confectionery, respectively. Alternatively, the code keys 33 may be used as tariff keys to set the amount of credit given for a particular value of purchase inputted by using the numeric keys 31. In this event, only three code (tariff) keys might be used, the first representing a first rate of credit per unit value of purchase, the second representing double the first and the third representing treble the first. The code or tariff keys may also be arranged to selectively issue a standard amount of credit.

It is also envisaged that if the application demands, the operator could key in a number of credit points directly, although this is not a preferred feature.

Having entered details of the value of the transaction or the amount of credit by the numeric keys 31, and the nature of the transaction by the code keys 33, the operator uses the control keys 32 to enter the information to the temporary storage of the processing unit 22. If the present issuer is a post-paying issuer, the processing unit 22 examines the data now held in temporary storage to check that:-
a. the present credit issuer is an issuer one of whose outlets has been visited before (i.e., that a data portion from the card has issuer identifying data corresponding to the identifying data of the present credit issuer), or that sufficient card capacity would exist to enter a new data portion consisting of at least one bucket,
b. that the total credit existing on the card added to the credit about to be issued by the credit issuance terminal will not exceed the maximum capacity of the card.

If the credit issuance terminal of the post-paying issuer finds that a data portion therefor has not previously been entered on the card and that the card lacks the capacity for such a new data portion, for example if 27 credit issuers appear on the card, the customer display will produce a message advising the customer that although the card does not contain the maximum possible credit for the card, further credits can only be made at an outlet of an issuer already having a data portion on the card. The display will then advise the operator to insert a new card, and the relevant credit may be entered to such a new card.

The card has a predetermined maximum credit capacity and if the card has insufficient capacity remaining for the amount of credit to be made, then an amount of credit sufficient to completely fill the card to the predetermined maximum is made, this amount being decremented from the total amount to be credited at the particular transaction. The remaining amount to be credited is then applied to a further card or further cards for the customer concerned.

If the credit issuance terminal is able to credit to the card of concern then the relevant amount of credit is added to the event data for the card, either adding to the total of a data portion already existing or assembling the data for a new data portion. The data portion are ranked in descending order of credit and are written to the card with the number of buckets relevant to the number of credit issuers concerned, as described above. At the same time the running total of credit points on the card and, if appropriate, the number of credit points entered by pre-paid issuers is updated by the issuance terminal for writing to the card. Furthermore, relevant items of fixed data and the redemption data, described above herein, are updated by the terminal so that the present terminal identity will be recorded as the latest terminal visited.

If the processing unit 22 of the credit issuance terminal detects that more than the first predetermined number (mentioned above) of credit issuers have entries for the card, then data portions for pre-paying issuers are sacrificed as necessary, the pre-paying issuer information being retained as a sub-total.

If the present issuer is pre-paying, then not all of the above steps may be needed. However, in that case, the terminal will increment the pre-paying total data on the card as well as the overall total event data by the amount credited.

At substantially the same time as the information is re-written to the card 1 associated with the reader/writer 21, the data from the current transaction, including the amount of credit, the card identifier and the time of the transaction are transferred to the memory 23. This data may be accessed by the processor 22 for checking, as later described.

Each issuance terminal is pre-loaded with a predetermined number of credit points. The credit points of an issuance terminal are set by a loading card issued by the card provider and physically taken to an issuance terminal 2. The loading card is inserted into the reader/writer 21 of an issuance terminal to enable the terminal to issue a predetermined amount of credit points by "filling up" a portion of the memory 23 on the credit issuance terminal with unallocated points. The processing unit 22 recognises that the loading card is such a card, and transfers the credit points data to the memory 23. While inserted into the issuance machine, the loading card also acquires from the credit issuance terminal-information, stored in the memory of the issuance terminal, relating to transactions made since the last loading operation. The processor 26 of the terminal is programmed to carry out credibility checks on transactions made, for example the amounts of credit. It also checks other factors, for example whether repeated credits have been made to the same card. Data concerning over-high or repeated credits are output from the credit issuance terminal to the loading card. In the presently described embodiment, the loading card is returned to the provider for reading the information obtained from the issuance terminal in a card control reader 5 of the provider. However, it would be possible for the information downloaded onto the loading card to be read-off by a similar card control reader held by the credit issuer himself.

Once a suitable amount of credit has been made to the card 1 the customer takes the card to a card redeemer X, for purchase or part-purchase of goods or services.

At the card redeemer X, Y the card 1 is read by a card value reader 4 to ascertain the amount of credit points on the card and the credit points redeemed. In the preferred embodiment, the unique identifier of the card is read and stored to prevent re-use of the credit, but such fraud could be prevented in other ways, for instance by setting an indicator on the card.

As the card is read by the card value reader 4 a customer display similar to that on the credit issuance terminal 2 shows the number of credit points available on the card, and also the monetary value associated with those points. Preferably the card value reader 4 is operatively connected to an electronic point of sale (EPOS) unit. Such a connection allows the customer to use the card directly as part or full payment for items purchased from the redeemer.

The record-carrying card is retained by the card-redeemer X so as to allow the information stored on the card to be accessed by the card control reader 5. The card control reader 5 shown in Figure 5 may be a separate card reader located on the premises of the card redeemer, or may be integrated with the card value reader. It is also possible that the card control reader 5 may be situated remotely from the card value reader 4, for example, at a single central control location, but this arrangement is not preferred.

The card-control reader 5 has a card-reader 501 coupled via bus 502 to a processor module 503. The processor module 503 is in turn connected via a communication path 504 to the data processor 6. When a card 1 has been redeemed, it is read in the card reader 501. Data from the card is transferred over bus 502 to the processor module 503 for evaluation. The processor module 503 has a buffer store for the evaluated data, and periodically the contents of the buffer store are transmitted over the communication path 504 to the data processor 6. The data processor is connected via further communication channels 505 to other card control readers 5. The nature of the communications paths 504, 505 is appropriate to the separation between the data processor and the card control readers 5, and could be radio links, land lines, or optical fibres, for instance. In the processor module 503 the data read from the card 1 is checked for self-consistency. To this end the credit points from each stored data portion are totalled, and, if appropriate, added to the pre-paid credit total and the resultant is compared with the total value of points stored on the card. The values of credit points in each stored data portion are then added to the appropriate respective running totals for each credit issuer held in the buffer storage area of the processor module 503.

As mentioned above the credit issuance terminal 2 may be associated with other devices.

In the arrangement of Figure 5, the terminal 2 is coupled to an EPOS terminal 50, making the actions to operate the credit issuance terminal less complex. The card is introduced into the slot on the credit issuance terminal, and the customer display indicates the same information as previously. However, when the purchase has been completed the EPOS terminal 50 automatically sends the credit data to the processing unit without the need for the operator to input this data manually by the keyboard. The credit points may be transferred to the card, and to the internal memory of the terminal, either by using the enter key on the keypad, or in response to a stimulus from the EPOS terminal 50 itself.

A further arrangement is shown in Figure 6 which enables the credit issuance terminals to be remote from the point of sale, but coupled to a local data processor 60. In this arrangement the operation is as follows:-

Upon making a purchase at a first point of sale device, a purchaser's card is passed through a local card reader to identify the particular card and the amount of credit points to be added which information is fed to the remote data processor 60. The purchaser may then make further purchases at other points of sale, each time passing his card through respective point of sale card readers. Once all purchases have been completed, the card is taken to a remote credit issuance terminal where the total of credits made is entered onto the card for the processor 60.

In both of the arrangements shown in Figure 5 and 6 it may not always be strictly necessary for the credit issuance terminal to maintain its own memory for transactions made, since the data processor unit or the EPOS terminal itself may be capable of assuming the function of storage of the transactions.

The bus 206 also allows the credit issuer to obtain information on the transactions of the credit issuance terminal. To this end, an analyser device, for example, a laptop computer 207, may be coupled to the bus 206. The information from the memory 23 is then downloaded for analysis, e.g., for recognising fraudulent use of the terminal.

As described above, the record-carrier is a magnetic-stripe type card, but the invention is not to be limited thereto. In this respect other types of machine-readable carriers could alternatively be used, e.g. smart cards and optical cards. Also, although Figure 1 was described using only three issuers it will now be understood the invention is not limited thereto.

## Claims

1. A record carrier storing data from a plurality of issuers, each issuer having one or more write means (2), said record carrier (1) including a storage area (10, 11, 12) capable of data redundancy whereby said data (101, 102) in said area is representative of and discerns each said issuer (12) and is representative of an event associated with each said write means of said issuer (2), and the format of the data is adaptively configurable depending on the number of issuers such that data redundancy may be reduced with increasing numbers of issuers.

2. A record carrier according to claim 1 wherein said data comprises identifying data (101) indicative of the identity of a respective issuer and event data (102) indicative of an event associated with the respective write means (2).

3. A record carrier according to claim 1 or 2 wherein said storage area (11) stores data representive of a first and last write means (2) operatively associated with said record carrier.

4. A record carrier according to claim 2 wherein said event data (102) is representative of a numerical value.

5. A record carrier according to claim 4 wherein the event data (102) for each identified issuer is stored as a total numerical value for said each identified write means.

6. A record carrier according to claim 5 wherein the event data (102) for all of the identified issuer is stored in said storage area as a total separately from said event data for each identified issuer.

7. A record carrier according to any preceding claim wherein said data further comprises record carrier identifying data, distinctive of the record carrier.

8. A record carrier according to any preceding claim which is of substantially credit-card dimensions.

9. A record carrier according to claim 8 wherein data are stored on magnetic tracks.

10. An arrangement for writing and reading data from one of a plurality of issuers to a non visibly readable record carrier (1) having a storage area capable of data redundancy comprising means (22) for providing identifying data indicative of the issuer, means (27) for providing event data representative of an event associated with said issuer, write means (21) for writing a data portion (101, 102) including said identifying data (101) and said event data (102) to said record carrier (1) such that the data portion indicates the event data and the issuer writing said data portion, a record carrier reader (21) for providing read data corresponding to data stored on the associated record carrier (1) and a detector (22) for evaluating said read data, the output of the detector controlling the write means (21), and said arrangement being arranged to adaptively configure the format of the data on said record carrier so that data redundancy may be reduced depending upon the number of issuers read from said record carrier.

11. An arrangement according to claim 10 wherein said event data (102) is representative of a numerical value.

12. An arrangement according to claim 10 or 11 wherein said detector (22) determines the total numerical value of all previously stored event data on said record carrier (1) and provides a control signal for inhibiting said write means (21) if the total value exceeds a predetermined value.

13. An arrangement according to any of claims 10 to 12 wherein said detector (22) detects the number of previously stored data portions indicative of an issuer on said recorder carrier (1) and provides a control signal for inhibiting said write means if said number exceeds a predetermined number.

14. An arrangement according to claim 13 wherein said detector (22) detects previously stored identifying data in said read data, and said arrangement further comprises comparison means (22) for comparing said previously stored identifying data (101) with said identifying data indicative of the issuer of concern, whereby if no previously stored data portion includes identifying data indicative of an issuer, then said write means (21) writes a new data portion to said record carrier, said new data portion comprising identifying data (101) indicative of said issuer and event data associated with said arrangement of said issuer.

15. An arrangement according to claim 13 wherein the detector (22) is arranged to detect previously stored event data of said previously stored data portions and if a stored data portion (101, 102) includes identifying data indicative of said issuer, the said write means writes a data total representative of the sum of:
(a) the numerical value of event data (102) representative of said event associated with said issuer; and
(b) the numerical value of said previously stored event data representative of previous events associated with said issuer to that portion in place of said previously stored event data whereby said event data is updated.

16. An arrangement according to any of claims 10 to 15 further comprising means (22) for determining the number of data portions representative of issuers to be written to said record carrier (1), and control means (22) responsive to the said number for controlling said write means (21) whereby said number of times of writing said data portions (101, 102) depends on the number of data portions (101, 102).

17. An arrangement according to claim 16 wherein means (21, 22) are provided for writing afresh previously stored data portions (101, 102) and, if applicable, a new data portion (101, 102) to said record carrier (2) whereby data portions representative of data having higher numerical values of event data are presented for reading before data portions having lower numerical values of event data.

18. An arrangement according to claim 17 having discriminator means (22) for discrimination of data portions to be written to said record carrier (1) into first data portions having identifying data exhibiting a first characteristic and second said data portions having identifying data exhibiting a second characteristic and format control means (22), responsive to the total number of data portions to be written to said recorder carrier (1) and operable if the total number of data portions exceeds a predetermined threshold to cause said write means to write to said record carrier only event data from a first said data portion, and to write to said record carrier said second data portions including identifying data and event data.

19. An arrangement according to any one of claims 10 to 18 wherein means (22) are provided for writing said event data associated with said arrangement to memory means (23) associated with said arrangement substantially contemporaneously with writing said data to said record carrier.

20. An arrangement according to any of claims 10-19 wherein a keyboard (25) is provided for input of said event data (102) to said arrangement.

21. An arrangement as in any of claims 10-20 wherein said record carrier (1) is of substantially credit card dimension.

22. An arrangement as in claim 21 wherein data are stored in magnetic tracks on said record carrier (1).

23. A reader for a record carrier embodying data input by one or more write means (2) associated with a respective one of a plurality of issuers, said data comprising identifying data (101) representative of said issuer and event data (102) indicative of an event recorded by the write means (2) of said issuer, said reader including means (501) for reading said identifying data, means (501) for reading said event data and means (503) for correlating said identifying data and event data associated therewith whereby the format of the data is adaptively configurable depending on the number of issuers such that data redundancy may be reduced with increasing numbers of issuers.

24. A reader according to claim 23 further comprising means (503) for storing said correlated identifying data and event data.

25. A reader according to claims 23 or 24 further comprising data communication means (504) for transmitting said correlated identifying and event data to data processor means (6).

26. A method of conveying data information from a plurality of issuers each utilising one or more read-write arrangements (2), each arrangement comprising means (22) for providing identifying data (101) indicative of the respective issuer, means (22) for providing event data (102) indicative of an event associated with the respective arrangement of said issuer and at least one record carrier evaluator (5), comprising the steps of:
(a) providing at least one record carrier (1) having a storage area capable of data redundancy;
(b) bringing said record carrier into co-operation with a respective read-write arrangement (2);
(c) reading data stored on said record carrier;
(d) writing (21) a data portion to said record carrier (1), said data portion comprising said identifying data (101) and said event data (102) whereby the format of the data is adaptively configurable depending on the number of issuers such that data redundancy may be reduced with increasing numbers of issuers;
(e) bringing said record carrier (1) into co-operation with a record carrier evaluator (5);
(f) evaluating data written to said record carrier (1); and
(g) correlating said identifying data (101) with said event data (102) so as to identify the read/write arrangement (2) to which said event was associated.

27. A method of conveying data information according to claim 26 in which step (b) further comprises:
1. reading (21) said record carrier (1);
2. determining (22) whether said carrier (1) embodies previous data portions comprising identifying data (101) indicative of an issuer;
3. storing each said previous data portion (101, 102) in said read/write arrangement (22); and
4. step (d) further comprises writing (21) afresh said stored data portions to said record carrier.

28. A method of conveying data information according to claim 27 further comprising the steps of:
counting (22) the number of data portions (101, 102) to be written to a record carrier (1) and in dependence thereon, controlling said number of times of writing (21) said data portion.

29. A method of conveying data information according to claim 28 wherein if said counted number of data portions is below a first threshold, said write means (21) is controlled to write (2) said data portions twice on each of two data tracks, if said counted number is above said first threshold but below a second threshold, said write means (21) is controlled to write said data portion (101, 102) once on each of the two data tracks and if said counted number is above said second threshold, said write means (21) is controlled to write said portion (101, 102) once jointly between said two data tracks.

30. A method of conveying data information according to claim 28 or 29 further comprising the steps of:
discriminating (22) the data portions to be written to said record carrier into first data portions having identifying data (10) exhibiting a first characteristic and second data portions having identifying data (101) exhibiting a second characteristic; and
in dependence on the counted number of data portions to be written to a record carrier, writing (21) said second data portions to said record carrier and, from a first data portion, writing only event data (102) to said record carrier.

31. A method of conveying data information according to claim 30 in which said event data (102) represents a numerical value and in step (f) data portions (101, 102) are written (21) to said record carrier (1) with data portions representing numerical values of event data of higher value being presented on said record carrier (1) before said portions representing lower numerical value.

32. A method of conveying data information as in any one of claims 26-31 wherein each said record carrier (1) is a magnetic-stripe card.

## Patentansprüche

1. Datenträger zum Speichern von Daten einer Mehrzahl von Ausstellern, wobei jeder Aussteller eine oder mehrere Schreibeinrichtungen (2) aufweist, wobei der genannte Datenträger (1) einen Speicherbereich (10, 11, 12) aufweist, der der Datenredundanz fähig ist, wobei die genannten Daten (101, 102) in dem genannten Bereich jeden der genannten Aussteller (12) darstellen und diese voneinander unterscheiden, und wobei die Daten ein Ereignis darstellen, das jeder der genannten Schreibeinrichtungen des genannten Ausstellers (2) zugeordnet ist, und wobei das Datenformat abhängig von der Anzahl der Aussteller adaptiv konfigurierbar ist, so daß die Datenredundanz mit zunehmender Anzahl der Aussteller reduziert werden kann.

2. Datenträger nach Anspruch 1, wobei die genannten Daten Erkennungsdaten (101) umfassen, die die Identität eines entsprechenden Ausstellers anzeigen, und wobei die Daten ferner Ereignisdaten (102) umfassen, die ein der entsprechenden Schreibeinrichtung (2) zugeordnetes Ereignis anzeigen.

3. Datenträger nach Anspruch 1 oder 2, wobei in dem genannten Speicherbereich (11) Daten gespeichert werden, die eine erste und eine letzte Schreibeinrichtung (2) darstellen, die dem genannten Datenträger funktionsfähig zugeordnet sind.

4. Datenträger nach Anspruch 2, wobei die genannten Ereignisdaten (102) einen numerischen Wert darstellen.

5. Datenträger nach Anspruch 4, wobei die genannten Ereignisdaten (102) jeden identifizierten Aussteller als numerischer Gesamtwert für jede der genannten identifizierten Schreibeinrichtungen gespeichert werden.

6. Datenträger nach Anspruch 5, wobei die Ereignisdaten (102) für alle identifizierten Aussteller in dem genannten Speicherbereich als Summe gespeichert werden, und zwar getrennt von den genannten Ereignisdaten für jeden identifizierten Aussteller.

7. Datenträger nach einem der vorstehenden Ansprüche, wobei die genannten Daten ferner Datenträger-Erkennungsdaten umfassen, die für den Datenträger charakteristisch sind.

8. Datenträger nach einem der vorstehenden Ansprüche, wobei der Datenträger im wesentlichen Kreditkartengröße aufweist.

9. Datenträger nach Anspruch 8, wobei die Daten auf Magnetspuren gespeichert werden.

10. Anordnung zum Schreiben und Lesen von Daten einer Mehrzahl von Ausstellern auf einen nicht-sichtbar lesbaren Datenträger (1) mit einem Speicherbereich, der der Datenredundanz fähig ist, mit: einer Einrichtung (22) zur Bereitstellung von Erkennungsdaten, die den Aussteller identifizieren; einer Einrichtung (27) zur Bereitstellung von Ereignisdaten, die ein dem genannten Aussteller zugeordnetes Ereignis darstellen; einer Schreibeinrichtung (21) zum Schreiben eines Datensatzes (101, 102), der die genannten Erkennungsdaten (101) und die genannten Ereignisdaten (102) aufweist, auf den genannten Datenträger (1), so daß der genannte Datensatz die Ereignisdaten sowie den Aussteller anzeigt, der den genannten Datensatz schreibt; einer Datensatz-Leseeinrichtung (21) zur Bereitstellung von Lesedaten, die den auf dem zugeordneten Datenträger (1) gespeicherten Daten entsprechen; und einem Detektor (22) zur Auswertung der genannten Lesedaten, wobei die Ausgabe des Detektors die Schreibeinrichtung (21) steuert, und wobei die genannte Anordnung so angeordnet ist, daß sie das Format der Daten auf dem genannten Datenträger adaptiv so konfiguriert, daß die Datenredundanz abhängig von der Anzahl der von dem genannten Datenträger ausgelesenen Aussteller reduziert werden kann.

11. Anordnung nach Anspruch 10, wobei die genannten Ereignisdaten (102) einen numerischen Wert darstellen.

12. Anordnung nach Anspruch 10 oder 11, wobei der genannte Detektor (22) den numerischen Gesamtwert aller vorher auf dem genannten Datenträger (1) gespeicherten Ereignisdaten ermittelt und ein Steuersignal zur Sperrung der genannten Schreibeinrichtung (21) vorsieht, wenn der Gesamtwert einen vorbestimmten Wert überschreitet.

13. Anordnung nach einem der Ansprüche 10 bis 12, wobei der genannte Detektor (22) die Anzahl der vorher gespeicherten Datensätze erfaßt, die einen Aussteller auf dem genannten Datenträger (1) anzeigen, und wobei der Detektor ein Steuersignal zur Sperrung der genannten Schreibeinrichtung vorsieht, wenn die genannte Anzahl eine vorbestimmte Anzahl überschreitet.

14. Anordnung nach Anspruch 13, wobei der genannte Detektor (22) die vorher gespeicherten Erkennungsdaten in den genannten Lesedaten erfaßt, und wobei die genannte Anordnung ferner eine Vergleichseinrichtung (22) zum Vergleich der genannten vorher gespeicherten Erkennungsdaten (101) mit den genannten Erkennungsdaten umfaßt, die die in Betracht kommenden Aussteller anzeigen, und wenn kein bereits gespeicherter Datensatz Erkennungsdaten aufweist, die einen Aussteller kennzeichnen, so schreibt die genannte Schreibeinrichtung (21) einen neuen Datensatz auf den genannten Datenträger, wobei der genannte neue Datensatz Erkennungsdaten (101) aufweist, die den genannten Aussteller anzeigen sowie die Ereignisdaten, die der genannten Anordnung des genannten Ausstellers zugeordnet sind.

15. Anordnung nach Anspruch 13, wobei der genannte Detektor (22) so angeordnet ist, daß er bereits gespeicherte Ereignisdaten der genannten vorher gespeicherten Datensätze erfaßt, und wenn ein gespeicherter Datensatz (101, 102) Erkennungsdaten aufweist, die den genannten Aussteller identifizieren, so schreibt die genannte Schreibeinrichtung eine Datensumme, die insgesamt die Summe folgender Werte darstellt:
(a) des numerischen Werts der Ereignisdaten (102), die das dem genannten Aussteller zugeordnete genannte Ereignis darstellen; und
(b) des numerischen Werts der genannten vorher gespeicherten Ereignisdaten, die vorherige Ereignisse darstellen, die dem genannten Aussteller zugeordnet sind, und zwar in diesem Satz an Stelle der genannten vorher gespeicherten Daten, wodurch die genannten Ereignisdaten aktualisiert werden.

16. Anordnung nach einem der Ansprüche 10 bis 15, wobei die Anordnung ferner eine Einrichtung (22) zur Bestimmung der Anzahl der die Aussteller darstellenden Datensätze umfaßt, die auf den genannten Datenträger (1) geschrieben werden soll, und wobei die Anordnung ferner eine Steuerungseinrichtung (23) umfaßt, die zur Steuerung der genannten Schreibeinrichtung (21) auf die genannte Anzahl anspricht, wobei die Anzahl der Schreibvorgänge der genannten Datensätze (101, 102) von der Anzahl der Datensätze (101, 102) abhängig ist.

17. Anordnung nach Anspruch 16, wobei die Einrichtungen (21, 22) vorgesehen sind, um vorher bzw. bereits gespeicherte Datensätze (101, 102) erneut und falls zutreffend, einen neuen Datensatz (101, 102) auf den genannten Datenträger (2) zu schreiben, wobei Datensätze, die Daten mit einem höheren numerischen Wert von Ereignisdaten darstellen, vor den Datensätzen zum Auslesen vorgesehen werden, die einen niedrigeren numerischen Wert von Ereignisdaten aufweisen.

18. Anordnung nach Anspruch 17, wobei die Anordnung eine Diskriminatoreinrichtung (22) zur Unterscheidung der auf den Datenträger (1) zu schreibenden Datensätze in erste Datensätze umfaßt, die Erkennungsdaten aufweisen, die ein erstes Merkmal anzeigen, sowie in zweite Datensätze, die Erkennungsdaten aufweisen, die ein zweites Merkmal anzeigen, und mit einer Formatsteuerungseinrichtung (22), die auf die Summe der auf den Datenträger (1) zu schreibenden Datensätze anspricht und funktionsfähig ist, wenn die Summe der Datensätze einen vorbestimmten Grenzwert überschreitet, wobei bewirkt wird, daß die genannte Schreibeinrichtung aus dem ersten Datensatz nur Ereignisdaten auf den genannten Datenträger schreibt, und daß die genannte Schreibeinrichtung die zweiten Datensätze auf den Datenträger schreibt, die Erkennungsdaten und Ereignisdaten aufweisen.

19. Anordnung nach einem der Ansprüche 10 bis 18, wobei Einrichtungen (22) vorgesehen sind, die dazu dienen, die der genannten Anordnung zugeordneten Ereignisdaten in eine der genannten Anordnung zugeordnete Speichereinrichtung (23) zu schreiben, und zwar im wesentlichen gleichzeitig zu dem Schreiben der genannten Daten auf den genannten Datenträger.

20. Anordnung nach einem der Ansprüche 10 bis 19, wobei eine Tastatur (25) zur Eingabe der genannten Ereignisdaten (102) in die genannte Anordnung vorgesehen ist.

21. Anordnung nach einem der Ansprüche 1 bis 20, wobei der genannte Datenträger (1) im wesentlichen Kreditkartengröße aufweist.

22. Anordnung nach Anspruch 21, wobei die Daten auf dem genannten Datenträger (1) auf Magnetspuren gespeichert werden.

23. Leseeinrichtung für einen Datenträger, der Daten aufweist, die durch eine oder mehrere Schreibeinrichtungen (2) eingegeben werden, die jeweils einem entsprechenden Aussteller einer Mehrzahl von Ausstellern zugeordnet sind, wobei die genannten Daten Erkennungsdaten (101) aufweisen, die den genannten Aussteller darstellen, sowie Ereignisdaten (102), die ein Ereignis anzeigen, das von der Schreibeinrichtung (2) des genannten Ausstellers aufgezeichnet worden ist, wobei die genannte Leseeinrichtung eine Einrichtung (501) zum Lesen der genannten Erkennungsdaten, eine Einrichtung (501) zum Lesen der genannten Ereignisdaten und eine Einrichtung (503) zur Erzeugung einer Korrelation zwischen den genannten Erkennungsdaten und den diesen zugeordneten Ereignisdaten aufweist, wobei das Datenformat abhängig von der Anzahl der Aussteller adaptiv konfigurierbar ist, so daß die Datenredundanz mit zunehmender Anzahl der Aussteller reduziert werden kann.

24. Leseeinrichtung nach Anspruch 23, wobei diese ferner eine Einrichtung (503) zum Speichern der genannten in Korrelation gebrachten Erkennungsdaten und Ereignisdaten umfaßt.

25. Leseeinrichtung nach Anspruch 23 oder 24, wobei die Leseeinrichtung ferner eine Datenübertragungseinrichtung (504) zur Übertragung der genannten in Korrelation gebrachten Erkennungs- und Ereignisdaten zu einer Datenprozessoreinrichtung (6) umfaßt.

26. Verfahren zur Übertragung von Dateninformationen durch eine Mehrzahl von Ausstellern, die jeweils eine oder mehrere Schreib-Leseanordnungen (20) verwenden, wobei jede Anordnung eine Einrichtung (22) zur Bereitstellung von Erkennungsdaten (101) umfaßt, die den entsprechenden Aussteller anzeigen, sowie eine Einrichtung (22) zur Bereitstellung von Ereignisdaten (102), die ein der entsprechenden Anordnung des genannten Ausstellers zugeordnetes Ereignis anzeigen, und mit mindestens einer Datenträger-Auswertungseinrichtung (5), wobei das Verfahren die folgenden Schritte umfaßt:
(a) Bereitstellung mindestens eines Datenträgers (1) mit einem zur Datenredundanz fähigen Speicherbereich;
(b) Erzeugung eines Zusammenwirkens des genannten Datenträgers mit einer entsprechenden Schreib-Leseanordnung (29);
(c) Auslesen der auf dem genannten Datenträger gespeicherten Daten;
(d) Schreiben (21) eines Datensatzes auf den genannten Datenträger (1), wobei der genannte Datensatz die genannten Erkennungsdaten (101) und die genannten Ereignisdaten (102) umfaßt, wobei das Format der Daten abhängig von der Anzahl der Aussteller adaptiv konfigurierbar ist, so daß die Datenredundanz mit zunehmender Anzahl von Ausstellern reduziert werden kann;
(e) Erzeugung eines Zusammenwirkens zwischen dem genannten Datenträger (1) und einer Datenträger-Auswertungseinrichtung (5);
(f) Auswertung der auf den genannten Datenträger (1) geschriebenen Daten; und
(g) Erzeugung einer Korrelation zwischen den genannten Erkennungsdaten (101) und den genannten Ereignisdaten (102) zur Identifizierung der genannten Schreib-Leseanordnung (2), der das genannte Ereignis zugeordnet ist.

27. Verfahren zur Übertragung von Dateninformationen nach Anspruch 26, wobei der Schritt (b) folgende Teilschritte umfaßt:
1) Lesen (21) des genannten Datenträgers (1);
2) Feststellen (22), ob der genannte Träger (1) frühere Datensätze aufweist, die Erkennungsdaten (101) umfassen, die einen Aussteller anzeigen;
3) Speichern aller genannten vorherigen Datensätze (101, 102) in der genannten Schreib-Leseanordnung (22); und
4) Schritt (d) umfaßt ferner das erneute Schreiben (22) der genannten gespeicherten Datensätze auf den genannten Datenträger.

28. Verfahren zur Übertragung von Dateninformationen nach Anspruch 27, wobei das Verfahren ferner die folgenden Schritte umfaßt.
Zählen (22) der Anzahl der auf einen Datenträger (1) zu schreibenden Datensätze (101, 102), und abhängig davon, Steuerung der Anzahl der Vorgänge des Schreibens (21) des genannten Datensatzes.

29. Verfahren zur Übertragung von Dateninformationen nach Anspruch 28, wobei folgendes gilt: wenn die genannte gezählte Anzahl von Datensätzen einen ersten Grenzwert unterschreitet, wird die genannte Schreibeinrichtung (21) so gesteuert, daß die genannten Datensätze zweimal (2) auf jede von zwei Datenspuren geschrieben werden, und wenn die genannte gezählte Anzahl über dem genannten ersten Grenzwert jedoch unter einem zweiten Grenzwert liegt, so wird die genannte Schreibeinrichtung (21) so gesteuert, daß der genannte Datensatz (101, 102) einmal auf jede der beiden Datenspuren geschrieben wird, und wenn die genannte gezählte Anzahl über dem genannten zweiten Grenzwert liegt, so wird die genannte Schreibeinrichtung (21) so gesteuert, daß der genannte Satz (101, 102) einmal gemeinsam zwischen die genannten beiden Datenspuren geschrieben wird.

30. Verfahren zur Übertragung von Dateninformationen nach Anspruch 28 oder 29, wobei das Verfahren ferner die folgenden Schritte umfaßt:
Unterscheidung (22) der auf den genannten Datenträger zu schreibenden Datensätze in erste Datensätze mit Erkennungsdaten (101), die ein erstes Merkmal aufweisen, und in zweite Datensätze mit Erkennungsdaten (101), die ein zweites Merkmal aufweisen; und
abhängig von der gezählten Anzahl der auf einen Datenträger zu schreibenden Datensätze, Schreiben (21) der genannten zweiten Datensätze auf den genannten Datenträger, wobei aus einem ersten Datensatz nur die Ereignisdaten (102) auf den genannten Datenträger geschrieben werden.

31. Verfahren zur Übertragung von Dateninformationen nach Anspruch 30, wobei die genannten Ereignisdaten (102) einen numerischen Wert darstellen, und wobei in dem Schritt (f) Datensätze (101, 102) auf den genannten Datenträger (1) geschrieben (21) werden, wobei Datensätze, die numerische Werte von Ereignisdaten mit höherem Wert darstellen, auf dem Datenträger (1) vor den Datensätzen vorgesehen werden, die einen niedrigeren numerischen Wert darstellen.

32. Verfahren zur Übertragung von Dateninformationen nach einem der Ansprüche 26-31, wobei es sich bei jedem der genannten Datenträger (1) um eine Magnetstreifenkarte handelt.

## Revendications

1. Support d'enregistrement stockant des données provenant d'une pluralité d'émetteurs, chaque émetteur comportant un ou plusieurs moyens d'écriture (2), ledit support d'enregistrement (1) comprennant une zone de stockage (10, 11, 12) pouvant contenir des données redondantes, lesdites données (101, 102) contenues dans ladite zone représentant et discernant chacun desdits émetteurs (12) et représentant un événement associé à chacun des moyens d'écriture dudit émetteur (2), et le format des données pouvant être configuré de manière adaptative en fonction du nombre d'émetteurs de telle sorte que les données redondantes puissent être réduites à mesure que le nombre d'émetteurs augmente.

2. Support d'enregistrement suivant la revendication 1, dans lequel lesdites données comprennent des données d'identification (101) indiquant l'identité d'un émetteur respectif et des données d'événement (102) indiquant un événement associé au moyen d'écriture (2) respectif.

3. Support d'enregistrement suivant la revendication 1 ou 2, dans lequel la zone de stockage (11) stocke des données représentant un premier et un dernier moyens d'écriture (2) associés de manière opérationnelle audit support d'enregistrement.

4. Support d'enregistrement suivant la revendication 2, dans lequel lesdites données d'événement (102) représentent une valeur numérique.

5. Support d'enregistrement suivant la revendication 4, dans lequel les données d'événement (102) pour chaque émetteur identifié sont stockées sous la forme d'une valeur numérique totale pour chacun desdits moyens d'écriture identifiés.

6. Support d'enregistrement suivant la revendication 5, dans lequel les données d'événement (102) pour tous les émetteurs identifiés sont stockées dans ladite zone de stockage sous la forme d'un total, séparément desdites données d'événement pour chaque émetteur identifié.

7. Support d'enregistrement suivant l'une quelconque des revendications précédentes, dans lequel lesdites données comprennent en outre des données d'identification de support d'enregistrement, distinctives du support d'enregistrement.

8. Support d'enregistrement suivant l'une quelconque des revendications précédentes, présentant sensiblement les dimensions d'une carte de crédit.

9. Support d'enregistrement suivant la revendication 8, dans lequel des données sont stockées sur des pistes magnétiques.

10. Dispositif pour l'écriture et la lecture de données provenant d'un émetteur parmi une pluralité d'émetteurs sur un support d'enregistrement (1) pouvant être lu de manière non visible et présentant une zone de stockage pouvant contenir des données redondantes comprenant un moyen (22) destiné à fournir des données d'identification indiquant l'émetteur, un moyen (27) destiné à fournir des données d'événement représentant un événement associé audit émetteur, un moyen d'écriture (21) destiné à écrire une partie de données (101, 102) comprenant lesdites données d'identification (101) et lesdites données d'événement sur ledit support d'enregistrement (1), de telle sorte que la partie de données indique les données d'événement et l'émetteur écrivant ladite partie de données, un lecteur de support d'enregistrement (21) destiné à fournir des données de lecture correspondant aux données stockées sur le support d'enregistrement associé (1) et un détecteur (22) destiné à évaluer lesdites données de lecture, la sortie du détecteur commandant le moyen d'écriture (21), et ledit dispositif étant à même de configurer de manière adaptative le format des données sur ledit support d'enregistrement de telle sorte que la redondance des données puisse être réduite en fonction du nombre d'émetteurs lus à partir dudit support d'enregistrement.

11. Dispositif suivant la revendication 10, dans' lequel lesdites données d'événement (102) représentent une valeur numérique.

12. Dispositif suivant la revendication 10 ou 11, dans lequel ledit détecteur (22) détermine la valeur numérique totale de toutes les données d'événement stockées précédemment sur ledit support d'enregistrement (1) et délivre un signal de commande destiné à bloquer ledit moyen d'écriture (21) si la valeur totale dépasse une valeur prédéterminée.

13. Dispositif suivant l'une quelconque des revendications 10 à 12, dans lequel ledit détecteur (22) détecte le nombre de parties de données stockées précédemment indiquant un émetteur sur ledit support d'enregistrement (1) et délivre un signal de commande pour bloquer ledit moyen d'écriture si la valeur totale dépasse une valeur prédéterminée.

14. Dispositif suivant la revendication 13, dans lequel ledit détecteur (22) détecte des données d'identification stockées précédemment dans lesdites données de lecture, et ledit dispositif comprend en outre un moyen de comparaison (22) destiné à comparer lesdites données d'identification stockées précédemment (101) auxdites données d'identification indiquant l'émetteur respectif, de sorte que, si aucune partie de données stockées précédemment ne comprend de données d'identification indiquant un émetteur, ledit moyen d'écriture (21) écrit une nouvelle partie de données comprenant des données d'identification (101) indiquant ledit émetteur et des données d'événement associées audit dispositif dudit émetteur.

15. Dispositif suivant la revendication 13, dans lequel le détecteur (22) est à même de détecter des données d'événement stockées précédemment desdites parties de données stockées précédemment et si une partie de données stockées (101, 102) comprend des données d'identification indiquant ledit émetteur, ledit moyen d'écriture écrit un total de données représentant la somme de :
(a) la valeur numérique de données d'événement (102) représentant ledit événement associé audit émetteur, et
(b) la valeur numérique desdites données d'événement stockées précédemment représentant des événements précédents associés avec ledit émetteur à cette partie à la place de données d'événement stockées précédemment de sorte que lesdites données d'événement sont mises à jour.

16. Dispositif suivant l'une quelconque des revendications 10 à 15, comprenant en outre un moyen (22) destiné à déterminer le nombre de parties de données représentant des émetteurs à écrire sur le support d'enregistrement (1) et un moyen de commande (22) sensible audit nombre et destiné à commander ledit moyen d'écriture (21), de sorte que le nombre de fois que lesdites parties de données sont écrites (101, 102) dépend du nombre de parties de données (101, 102).

17. Dispositif suivant la revendication 16, dans lequel des moyens (21, 22) sont prévus pour écrire à nouveau des parties de données stockées précédemment (101, 102) et, si possible, une nouvelle partie de données sur ledit support d'enregistrement (2), de sorte que des parties de données, représentant des données ayant des valeurs numériques plus élevées de données d'événement sont présentées pour la lecture avant des parties de données ayant des valeurs numériques plus basses de données d'événement.

18. Dispositif suivant la revendication 17, comportant un moyen de discrimination (22) destiné à séparer des parties de données à écrire sur ledit support d'enregistrement (1) en premières parties de données comportant des données d'identification présentant une première caractéristique et en secondes dites parties de données comportant des données d'identification présentant une seconde caractéristique, ainsi qu'un moyen de commande de format (22), sensible au nombre total de parties de données à écrire sur ledit support d'enregistrement (1) et pouvant intervenir si le nombre total de parties de données dépasse une valeur seuil prédéterminée pouvant amener ledit moyen d'écriture à n'écrire sur ledit support d'enregistrement que des données d'événement provenant d'une première dite partie de données et à écrire sur ledit support d'enregistrement lesdites secondes parties de données comprenant des données d'identification et des données d'événement.

19. Dispositif suivant l'une quelconque des revendications 10 à 18, dans lequel le moyen (22) est prévu pour écrire lesdites données d'événement associées audit dispositif sur le moyen de stockage (23) associé audit dispositif sensiblement en même temps que l'écriture desdites données sur le support d'enregistrement.

20. Dispositif suivant l'une quelconque des revendications 10 à 19, dans lequel un clavier (25) est prévu pour introduire lesdites données d'événement (102) dans ledit dispositif.

21. Dispositif suivant l'une quelconque des revendications 10 à 20, dans lequel ledit support d'enregistrement (1) présente sensiblement les dimensions d'une carte de crédit.

22. Dispositif suivant la revendication 21, dans lequel des données sont stockées sur des pistes magnétiques dudit support d'enregistrement (1).

23. Lecteur pour un support d'enregistrement réalisant l'introduction de données à l'aide d'un ou de plusieurs moyens d'écriture (2) associés à un émetteur respectif d'une pluralité d'émetteurs, lesdites données comprenant des données d'identification (101) représentant ledit émetteur et des données d'événement (102) indiquant un événement enregistré par le moyen d'écriture (2) dudit émetteur, ledit lecteur comprenant un moyen (501) pour lire lesdites données d'identification, un moyen (501) pour lire lesdites données d'événement et un moyen (503) pour mettre en corrélation lesdites données d'identification et les données d'événement associées sachant que le format des données peut ainsi être configuré de manière adaptative en fonction du nombre d'émetteurs de telle sorte que la redondance des données puisse être réduite à mesure que le nombre d'émetteurs augmente.

24. Lecteur suivant la revendication 23 comprenant en outre un moyen (503) destiné à stocker lesdites données d'identification et données d'événement corrélées.

25. Lecteur suivant les revendications 23 ou 24, comprenant en outre un moyen de communication de données (504) destiné à transmettre lesdites données d'identification et d'événement corrélées au moyen de traitement de données (6).

26. Procédé d'acheminement de données à partir d'une pluralité d'émetteurs, chacun utilisant un ou plusieurs dispositifs de lecture/écriture (2), chaque dispositif comprenant un moyen (22) destiné à fournir des données d'identification (101) indiquant les émetteurs respectifs, un moyen (22) destiné à fournir des données d'événement (102) indiquant un événement associé au dispositif respectif dudit émetteur et au moins un dispositif d'évaluation de support d'enregistrement (5), comprenant les étapes consistant à :
(a) fournir au moins un support d'enregistrement (1) présentant une zone de stockage pouvant contenir des données redondantes;
(b) amener ledit support d'enregistrement en coopération avec un dispositif de lecture/écriture respectif (2);
(c) lire des données stockées sur ledit support d'enregistrement;
(d) écrire (21) une partie de données sur ledit support d'enregistrement (1), ladite partie de données comprenant lesdites données d'identification (101) et lesdites données d'événement (102), sachant que le format des données peut ainsi être configuré de manière adaptative en fonction du nombre d'émetteurs de telle sorte que la redondance des données puisse être réduite à mesure que le nombre d'émetteurs augmente;
(e) amener ledit support d'enregistrement (1) en coopération avec un dispositif d'évaluation de support d'enregistrement (5);
(f) évaluer des données écrites sur ledit support d'enregistrement (1), et
(g) mettre en corrélation lesdites données d'identification (101) avec lesdites données d'événement (102) de façon à identifier le dispositif de lecture/écriture (2) auquel ledit événement était associé.

27. Procédé d'acheminement de données suivant la revendication 26, dans lequel l'étape (b) comprend en outre :
(1) la lecture (21) dudit support d'enregistrement (1);
(2) l'étape (22) consistant à déterminer si ledit support d'enregistrement (1) incorpore les parties de données précédentes comprenant des données d'identification (101) indiquant un émetteur;
(3) le stockage de chacune des dites parties de données précédentes (101, 102) dans ledit dispositif de lecture/écriture (22), et
(4) l'étape (d) comprend en outre l'écriture (21) à nouveau desdites parties de données stockées sur ledit support d'enregistrement.

28. Procédé d'acheminement de données suivant la revendication 27, comprenant en outre les étapes consistant :
à compter (22) le nombre de parties de données (101, 102) à écrire sur un support d'enregistrement (1) et à commander, en fonction de ce nombre, le nombre de fois où ladite partie de données est écrite (21).

29. Procédé d'acheminement de données suivant la revendication 28, dans lequel, si le nombre de parties de données compté est inférieur à une première valeur seuil ledit moyen d'écriture (21) est commandé pour écrire (2) lesdites parties de données deux fois sur chacune des deux pistes de données, si le nombre compté est supérieur à ladite première valeur seuil, mais inférieur à une seconde valeur seuil, ledit moyen d'écriture (21) est commandé pour écrire ladite partie de données (101, 102) une fois sur chacune des deux pistes de données et si ledit nombre compté est supérieur à ladite seconde valeur seuil, ledit moyen d'écriture (21) est commandé pour écrire ladite partie (101, 102) une fois conjointement entre lesdites deux pistes de données.

30. Procédé d'acheminement de données suivant la revendication 28 ou 29, comprenant en outre les étapes consistant à :
séparer (22) les parties de données à écrire sur ledit support d'enregistrement en premières parties de données comprenant des données d'identification (10) présentant une première caractéristique et en secondes parties de données comprenant des données d'identification (101) présentant une seconde caractéristique, et
écrire (21), en fonction du nombre compté de parties de données à écrire sur le support d'enregistrement, lesdites secondes parties de données sur le support d'enregistrement et à n'écrire, à partir d'une première partie de données, que des données d'événement (102) sur ledit support d'enregistrement.

31. Procédé d'acheminement de données suivant la revendication 30, dans lequel lesdites données d'événement (102) représentent une valeur numérique et dans l'étape (f) des parties de données (101, 102) sont écrites (21) sur ledit support d'enregistrement (1) avec des parties de données représentant des valeurs numériques de données d'événement de valeur plus élevée présentées sur ledit support d'enregistrement (1) avant lesdites parties représentant une valeur numérique plus basse.

32. Procédé d'acheminement de données suivant l'une quelconque des revendications 26 à 31, dans lequel chacun desdits supports d'enregistrement (1) est une carte à piste magnétique.
